Europäisches Patentamt

European Patent Office

Office européen des brevets

(11) Veröffentlichungsnummer: **0 503 534 B1**

## (12) EUROPÄISCHE PATENTSCHRIFT

(45) Veröffentlichungstag der Patentschrift: **12.07.95**

(21) Anmeldenummer: **92103996.2**

(22) Anmeldetag: **09.03.92**

(51) Int. Cl.⁶: **B60C 11/04**

(54) **Fahrzeugreifen mit wellenförmigen Längsrillen.**

(30) Priorität: **12.03.91 DE 4107916**

(43) Veröffentlichungstag der Anmeldung:
**16.09.92 Patentblatt 92/38**

(45) Bekanntmachung des Hinweises auf die
Patenterteilung:
**12.07.95 Patentblatt 95/28**

(84) Benannte Vertragsstaaten:
**DE ES FR GB IT**

(56) Entgegenhaltungen:
**EP-A- 0 069 464**
**EP-A- 0 123 135**
**EP-A- 0 189 199**

(73) Patentinhaber: **Continental Aktiengesellschaft**
**Vahrenwalder Strasse 9**
**D-30165 Hannover (DE)**

(72) Erfinder: **Ramcke, Uwe**
**Hülperdinger Weg 32**
**W-3030 Walsrode (DE)**
Erfinder: **Trabandt, Hagen**
**Händelweg 7**
**W-3163 Sehnde 1 (DE)**

## Beschreibung

Die Erfindung bezieht sich auf einen Fahrzeugreifen, insbesondere für Nutzfahrzeuge, mit in Umfangsrichtung verlaufenden wellenförmigen Längsrille, wobei jeder Längsrille in jeder radialen Höhe genau eine zwischen der linken Rillenflanke und der rechten Rillenflanke gelegene Rillenmittellinie zugeordnet ist und in jeder radialen Höhe mittig zwischen den linken Extremen und den rechten Extremen der Rillenmittellinie eine exakt in Umfangsrichtung verlaufende Bezugslinie definiert ist, von der aus in der betreffenden radialen Höhe die Amplitude der wellenförmigen Rillenmittellinie zu messen ist, und wobei die in der Querschnittebene zu messenden Flankenwinkel, um den die Rillenflanken jeder Längsrille schräg gestellt sind, über dem Umfang periodisch schwanken, sodaß die Amplitude der wellenförmigen Rillenmittellinie der Längsrillen im Rillengrund größer als an der radial äußeren Peripherie ist, wobei - die Rillenmittellinie der Längsrillen entlang laufend - zumindest im Rillengrund nacheinander in periodischer Wiederholung verschiedene, axial nebeneinander liegende Bereiche durchlaufen werden. Ein solcher Fahrzeugreifen ist aus der US-PS 3,055,410 bekannt. Diese vorbekannte Gestaltung soll dazu dienen, das sogenannte "Steinefangen" zu vermindern.

Unter "Steinefangen" wird im Rahmen dieser Anmeldung die Eigenschaft profilierter Fahrzeugreifen verstanden, daß sich in seinen Rillen Steine festsetzen. Diese Eigenschaft stört unter anderem deshalb, weil - bei entsprechender Größe - eingefangene Steine den Rillengrund verletzen können. Bei den besonders wichtigen Fahrzeugluftreifen, auf die sich die Erfindung insbesondere bezieht, können eingefangene Steine bis zu den Gürtellagen vordringen.

Dabei wird eine Kapilare geschaffen, durch die Feuchtigkeit den Stahldrahtcord erreicht und korridieren läßt. Dies führt nicht nur zu einer Minderung der Drahtfestigkeit selbst sondern auch zu einer Minderung der Haftung des Polymers am Metall. Darüberhinaus bergen gefangene Steine die Gefahr, bei Überschreiten der Fluchtgeschwindigkeit das Reifenprofil geschoßartig zu verlassen. Schließlich erzeugen gefangene Steine Unwuchten.

Diese Probleme sind an Nutzfahrzeugreifen größer als an Reifen für Personenkraftwagen oder Motorräder. Dies liegt zum einen daran, daß die geforderten Kilometer-Laufleistungen bei Nutzfahrzeugreifen wesentlich höher liegen, zum zweiten daran, daß die Reifendurchmesser größer sind und zum dritten daran, daß die maximal erreichten Fahrgeschwindigkeiten geringer sind. Die beiden zuletzt genannten Ursachen lassen sich in der Weise zusammenfassen, daß die auf eingedrungene Steine wirkende maximale Fliehkraft, die tendenziell zu einer Rillensäuberung führt, bei LKW-Reifen geringer als bei PKW- oder Motorrad-Reifen ist.

Zwar ist das Niveau des unerwünschten Steinefangens durch Anwendung der Lehre aus der erwähnten US-PS 3,055,410 verringert worden, jedoch reicht es in manchen Anwendungsfällen nicht mehr aus angesichts der durch den Übergang von der Diagonal-Bauweise zur Radial-Bauweise erzielten Erhöhung der Laufleistung. Abgesehen davon daß das Problem des Steinefangens umso größer ist, desto größer der Reifenradius, desto geringer die Maximalgeschwindigkeit ist und desto mehr Steine der Reifen im Betrieb berührt, stören gefangene Steine nämlich umso mehr, desto länger der Reifen hält. Das Problem ist demgemäß besonders groß an Anhänger-Bereifungen von Baustellenfahrzeugen.

Besonders aktuell ist das Problem des Steinefangens bei einer Reifengestaltung gemäß der EP-PS 0 173 101 , weil die dort gelehrten Reifen neben einer Senkung des Rollwiderstandes vermittels der bewirkten Temperaturabsenkung in der Lauffläche besonders hohe Laufleistungen ermöglichen.

Aufgabe der Erfindung ist es, eine gattungsgemäße Laufflächengestaltung dahingehend zu ändern, daß das Steinefangen weiter reduziert ist.

Die Aufgabe wird erfindungsgemäß dadurch gelöst, daß - die Rillenmittellinie der Längsrillen entlang laufend - zumindest im Rillengrund nacheinander drei verschiedene Bereiche durchlaufen werden und zwar ein linker Extrembereich, ein Mittelbereich, der symmetrisch um die Bezugslinie herum angeordnet ist, und ein rechter Extrembereich und umgekehrt wieder zurück und periodisch so fort, wobei die Rillenmittellinie in ihren Mittelbereichen je einen steil zur Umfangsrichtung verlaufenden Versatz aufweist, während sie in den Extrembereichen in an sich bekannter Weise nur einen spitzen Winkel mit der Umfangsrichtung einschließt. Unter spitzen Winkeln werden im Rahmen dieser Anmeldung Winkel kleiner 40° bezeichnet und als "steil zur Umfangsrichtung verlaufend" werden solche Richtungen bezeichnet, die mit der Umfangsrichtung mindestens einen Winkel von 60° einschließen.

Vorzugsweise sollten im Rillengrund die Extrembereiche der Rillenmittellinie einen spitzen Winkel zur Umfangsrichtung kleiner 35° einnehmen. Weiterhin empfiehlt sich, daß im Rillengrund der Versatz einen Winkel zur Umfangsrichtung größer 65° einnimmt.

Aus Versuchen ist bekannt, daß Querrillen - das sind im wesentlichen axial verlaufende Rillen - in noch höherem Maße zum Steinefangen neigen als Längsrillen. Insofern ist es überraschend, daß die Erfindung zur Verminderung des Steinefangens Versätze in den Längsrillen lehrt, die im wesentlichen axial verlaufen.

Die Erfinder sind ausgegangen von der an völlig geraden Längsrillen mit symmetrischem Rillenquerschnitt bekannten Tatsache, daß das Steinefangen umso geringer ist, desto größer der in der Querschnittebene zu messende Flankenwinkel ist. (Flankenwinkel wird von der Normalen zur Reifenoberfläche aus gezählt.) Der Wahl eines großen Flankenwinkels, also einer weiten Rillenöffnung, steht entgegen, daß der Negativanteil des Profiles über der Lebensdauer rapide abnimmt. Das Aquaplaning-Verhalten würde sich dann zu sehr über der Laufleistung verschlechtern.

Von diesem Konflikt ausgehend gelangten die Erfinder zu der Idee, den linken und den rechten Flankenwinkel differenziert zu betrachten. Es zeigte sich, daß weniger der Mittelwert beider Flankenwinkel die Heftigkeit des Steinefangens beeinflußt als vielmehr der Maximalwert beider Flankenwinkel. Demgemäß wurde bei vorgegebener Rillenweite an der Peripherie und einer weiteren, kleineren Rillenweite im Rillengrund eine Verringerung des Steinefangens dadurch erzielt, daß einer der Nutenwinkel zu Null gesetzt wurde und der andere dementsprechend größer gewählt wurde. Die solchermaßen erzeugte Asymmetrie führt allerdings auch zu asymmetrischen Mikrowalkbewegungen in der Lauffläche und damit zu einem gewissen Driftwinkel. Dies ist im Hinblick auf Rollwiderstand und Laufleistung unerwünscht.

Eine Egalisierung wird dadurch erreicht, daß man diese Asymetrie über dem Umfang schwanken läßt. Die Egalisierung ist - bei an sich bekanntem parallelen Verlauf der Längsrillen - erst dann hinreichend, wenn die größte Wellenlänge der Längsrillen höchstens ein Fünftel der Länge der Bodenaufstandsfläche beträgt. Um das Profil nicht zu filigran werden zu lassen, sollte die größte Wellenlänge der Längsrillen mindestens ein Neuntel der Länge der Bodenaufstandsfläche betragen.

Die Erfinder gingen der Frage nach, warum die Reifen gemäß der US-PS 3,055,410 zwar weniger aber immer noch zu viele Steine fingen. Sie entdeckten, daß die solchermaßen gestaltete Wellenförmigkeit, bei der stetig vom linken zum rechten Extrem gegangen wird, einen mittleren Bereich enthält, in dem der Rillenquerschnitt symmetrisch ist. In aufwendigen Versuchen konnten die Erfinder diesen mittleren Bereich als bevorzugte Stellen herausfiltern, an denen verstärkt Steine gefangen werden. So wurde die erfinderische Lehre herauskristallisiert, daß eben diese mittleren Bereiche eliminiert werden müssen.

Gemäß der Erfindung wird vom stetigen Wechsel zwischen linkem und rechtem Extrem abgegangen und statt dessen in dem als problematisch erkannten, mittig zwischen den Extremen liegendem Bereich in Form eines Versatzes eine Unsteitigkeitsstelle angeordnet. Im Zusammenspiel mit der Verwindung der Flanken finden eingedrungene Steine in diesen Bereichen nur einen deutlich verminderten Halt.

Der Begriff "Mittelbereich" der Rillenmittellinie wird im Rahmen dieser Anmeldung so verwendet, daß die linke Grenze des Mittelbereiches mit der linken Grenze des Versatzes und die rechte Grenze des Mittelbereiches mit der rechten Grenze des Versatzes übereinstimmt; der Versatz füllt also den gesamten Mittelbereich aus. Vorzugsweise erstreckt sich der Mittelbereich mindestens von -0,2 A bis +0,2 A und höchstens von -0,4 A bis +0,4 A ,wobei "A" das Maß der Amplitude der wellenförmigen Rillenmittellinie im Rillengrundist.

Nach einer bevorzugten Ausführung der Erfindung schließt im Rillengrund der Versatz der Rillenmittellinie in einem Winkel zwischen 75° und 105° an die Extrembereiche der Rillenmittellinie an. Diese Ausführung gemäß Anspruch 2 wird vorteilhafterweise mit einer Ausführung gemäß Anspruch 13 kombiniert.

Die Ausführung gemäß Anspruch 13 ist dadurch gekennzeichnet, daß die Versätze 14 in umgekehrter Umfangsorientierung verlaufen als die anschließenden Extrembereiche. Bei dieser Formulierung ist davon ausgegangen, daß ein Beobachter in einer beliebigen, aber festzulegenden Orientierung durch den Rillengrund der betrachteten Längsrille läuft. Dabei vollzieht er gegenüber einem an der Lauffläche angebundenen Inertialsystem Bewegungen in unterschiedlicher Richtung; diese Richtungen lassen sich in eine axiale Komponente und in eine Komponente in der Umfangsrichtung aufteilen. In der bezeichneten Anspruchsformulierung wird nur die Bewegungskomponente in Umfangsrichtung betrachtet. Bei Übergang - so die Lehre dieses Anspruches - von einem Extrembereich in den Mittelbereich und umgekehrt soll sich das Vorzeichen dieser Umfangskomponente ändern.

Es wurde bereits dargelegt, wie eine hinreichende Egalisierung der Driftneigung infolge asymmetrischen Rillenquerschnittes trotz parallelem Verlauf aller Längsrillen erreicht werden kann; diese Lehre ist Gegenstand des Anspruches 10 . Der Vorteil paralleler Längsrillen ist der, daß ein enger Rillenabstand möglich ist. Um eine ausreichende Quersteifigkeit der im wesentlichen in Umfangsrichtung verlaufenden Rippen zu gewährleisten, reicht als Rillenabstand - gemessen zwischen den Bezugslinien der Längsrillen - das 2,2-fache der Rillentiefe aus. Überdies gibt es keinerlei Beschränkungen in der Rillenanzahl; insbesondere ist auch eine ungerade Rillenanzahl, beispielsweise 5 , möglich.

Bei gerader Anzahl der Längsrillen ist eine vollständige Kompensation der alternierenden Driftneigung dadurch möglich, daß die wellenförmigen Längsrillen in der Weise gepaart werden, daß die beiden Längsrillen eines Rillenpaares zueinander bezüglich einer in Umfangsrichtung verlaufenden Symmetrieachse symmetrisch sind, sodaß an jeder Umfangsstelle einem linken Extrem einer Längsrille ein rechtes Extrem der anderen Längsrille des selben Rillenpaares entspricht und umgekehrt. Die beiden Längsrillen eines solchen Rillenpaares brauchen nicht einander benachbart zu sein.

Wo einander benachbarte Längsrillen zueinander achsensymmetrisch sind, sollte zur Aufrechterhaltung ausreichender Quersteifigkeit der dazwischen liegenden Rippe der Rillenabstand - wiederum gemessen zwischen den Rillenbezugslinien - mindestens das 2,6-fache der Rillentiefe betragen. Wo im Verhältnis zur Laufflächenbreite eine hohe Anzahl von Längsrillen bei vollständiger Kompensation der Driftneigung untergebracht werden soll, ist es deshalb sinnvoll, daß der Rillenabstand zwischen den beiden am nächsten der Laufflächenmitte gelegenen Längsrillen größer ist als alle anderen Abstände zwischen benachbarten Längsrillen und, daß von den einander benachbarten Längsrillen nur diese am nächsten der Laufflächenmitte gelegenen Längsrillen zueinander achsensymmetrisch sind, während alle anderen einander benachbarten Längsrillen parallel zueinander verlaufen. Auf diese Weise liegt die breiteste Rippe in der Laufflächenmitte, wo die geringsten Strömungsquerschnitte zur Wasserabführung erforderlich sind.

Bei so erzielter vollständiger Driftkompensation kann eine wesentlich größere Wellenlänge der Längsrillen zugelassen werden, als dies bei paralleler Ausrichtung aller Längsrillen möglich wäre. Vorzugsweise liegt bei erfindungsgemäßen Reifen mit paarweise achsensymmetrischen Längsrillen die Wellenlänge der Längsrillen zwischen einem Drittel und einem Siebtel der Länge der Bodenaufstandsfläche unter Nennbedingungen. Zu den Nennbedingungen gehört die Nennradlast, der vorgeschriebene Luftdruck und metereologische Normalbedingungen (760 mm Hg , 20°C).

Vorzugsweise beträgt die Amplitude der wellenförmigen Rillenmittellinie im Rillengrund mindestens 40 % der Rillenweite an der Peripherie. Hierdurch wird eine ausreichende Verminderung des Steinefangens gewährleistet. Bei extrem schwierigen Einsatzbedingungen (z. B. Anhänger im Baubetrieb) sollte die Amplitude der Rillenmittellinie im Rillengrund mindestens 46 % der Rillenweite an der Peripherie betragen.

Insbesondere dort, wo es auf hohe Laufleistungen ankommt, sollte die Amplitude der wellenförmigen Rillenmittellinie an der Peripherie höchstens 10 % der Rillenweite an der Peripherie betragen. So wird eine hohe Gleichmäßigkeit des Abriebes erzielt und es werden gewölbte Klotzoberflächen, sogenannte Auswaschungen, vermieden.

An Nutzfahrzeugreifen ist eine Laufrichtungsbindung unerwünscht. Zur Vermeidung einer Laufrichtungsbindung ist es bekanntermaßen erforderlich, daß zumindest das gesamte Laufflächenbild zu einem in der Laufflächenmitte befindlichen Zentrum punktsymmetrisch ist. Dabei wird die Lauffläche in ihrer Abwicklung betrachtet und die eventuell schwankende Umfangserstreckung eines Profilschrittes ignoriert. Auch ist bekannt, die Punktsymmetrie dadurch zu steigern, daß jede einzelne Längsrille zu einem auf ihrer Bezugslinie befindlichen Zentrum punktsymmetrisch ist. Nach einer in den Ansprüchen 14 und 15 behandelten bevorzugten Weiterbildung der Erfindung wird die an sich bekannte punktsymmetrische Gestaltung der einzelnen Längsrillen in der Draufsicht auf die Abwicklung mit den erfindungsgemäßen Merkmalen kombiniert.

Eine weitere Verminderung des Steinefangens wird dadurch erzielt, daß die Längsrillen im Querschnitt im Rillengrund eine Ausbuchtung von einer radialen Höhe zwischen 1,5 und 2,2 mm aufweisen bei einer axialen Weite zwischen 2,0 und 3,0 mm. Am radial äußeren Ende der Ausbuchtung stehen die Rillenflanken zumindest steiler als in den radial äußeren Bereichen des Rillenquerschnittes, vorzugsweise senkrecht. Bei Vorgabe einer maximalen radial äußeren Rillenweite und einer minimalen radial inneren Rillenweite ermöglicht die bevorzugte Ausbuchtung eine noch flachere Stellung der Rillenflanken in den radial äußeren Bereichen. Gerade in den radial äußeren Bereichen ist aber das Problem des Steinefangens besonders groß. Im später behandelten Ausführungsbeispiel ist der Übergang zwischen der Ausbuchtung und dem radial außen anschließenden Querschnittsbereich der Längsrille als ein Knick dargestellt; dies ist nicht zwingend: Vielmehr kann zwischen der radial innen liegenden Ausbuchtung und dem radial äußeren Querschnittsbereich noch ein Zwischenbereich angeordnet sein, in dem die Flankenneigung zwischen dem Wert radial außen und dem radial innen liegt. Die beiden solchermaßen erzeugten Knicke steigern den Effekt noch etwas und verringern den jeweiligen Knickwinkel.

Von den folgenden erläuternden Figuren zeigt

Fig. 1 in perspektivischer Ansicht einen erfindungsgemäßen Fahrzeugluftreifen,

Fig. 2 ausschnittsweise einen Längsschnitt durch die Lauffläche in der Nähe des Rillengrundes

Fig. 3 analog Fig. 2 einen Längsschnitt, jedoch in halber Höhe

Fig. 4 eine Längsrille bevorzugter Ausführung mit einer Ausbuchtung im Rillengrund

Fig. 5 analog Figur 4 ausschnittsweise im Querschnitt eine erfindungsgemäß gestaltete Längsrille ohne Ausbuchtung im Rillengrund

Fig. 6    in Spälteansicht ein detailliertes LKW-Reifenprofil, in dem alle vier Profilrillen parallel zueinander verlaufen,

Fig. 7    analog Figur 6 in Spälteansicht ein anderes detailliertes LKW-Reifenprofil mit ebenfalls vier Profilrillen, die jedoch paarweise zueinander achsensymmetrisch sind.

Fig. 8    einen Fahrzeugreifen in Seitenansicht.

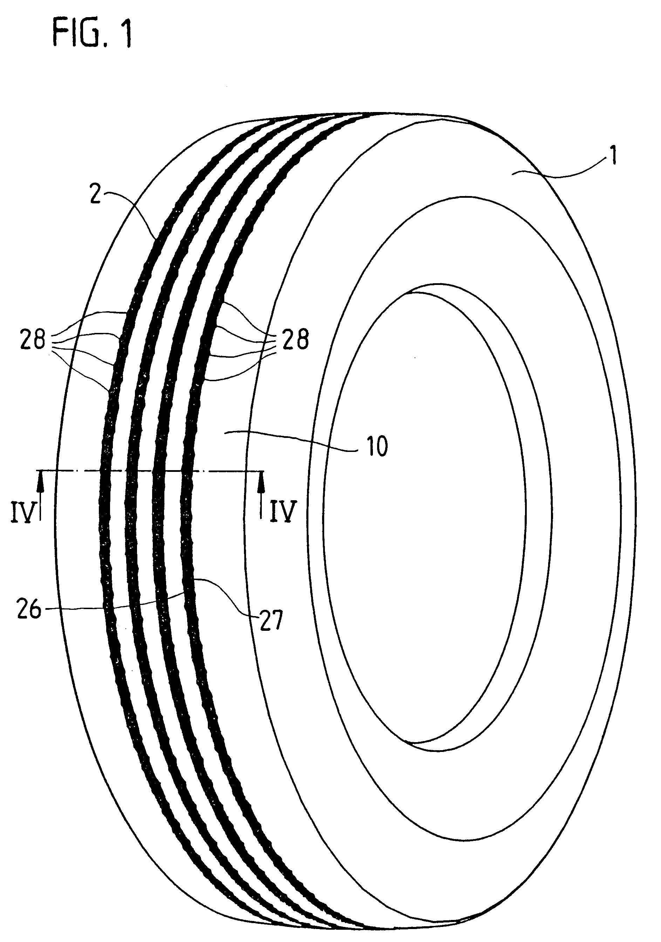

In der der Übersicht dienenden Figur 1 ist ein erfindungsgemäßer Reifen 1 mit vier Längsrillen 2 in perspektivischer Ansicht gezeigt. Diese Profilgestaltung ist insbesondere für nicht angetriebene Achsen von LKW und von Anhängern bzw. Sattelschlepper-Aufliegern gedacht. Die Lamellierung ist in dieser Übersichtszeichnung nicht dargestellt. Die Längsrillen 2 sind über ihre gesamte Tiefe schwarz dargestellt, so wie es einem Betrachter aus der Ferne erscheint.

Gemäß dieser Darstellungsweise ist vom Laufflächenbereich nur dessen Peripherie 10 erkennbar. Die linken Kanten 26 und rechten Kanten 27 der Längsrillen 2 sind bis auf versetzt angeordnete kleine Ausnehmungen 28 völlig geradlinig und verlaufen in Umfangsrichtung. Die Existenz dieser Ausnehmungen 28 entspricht einer bevorzugten Ausführungsform der Erfindung.

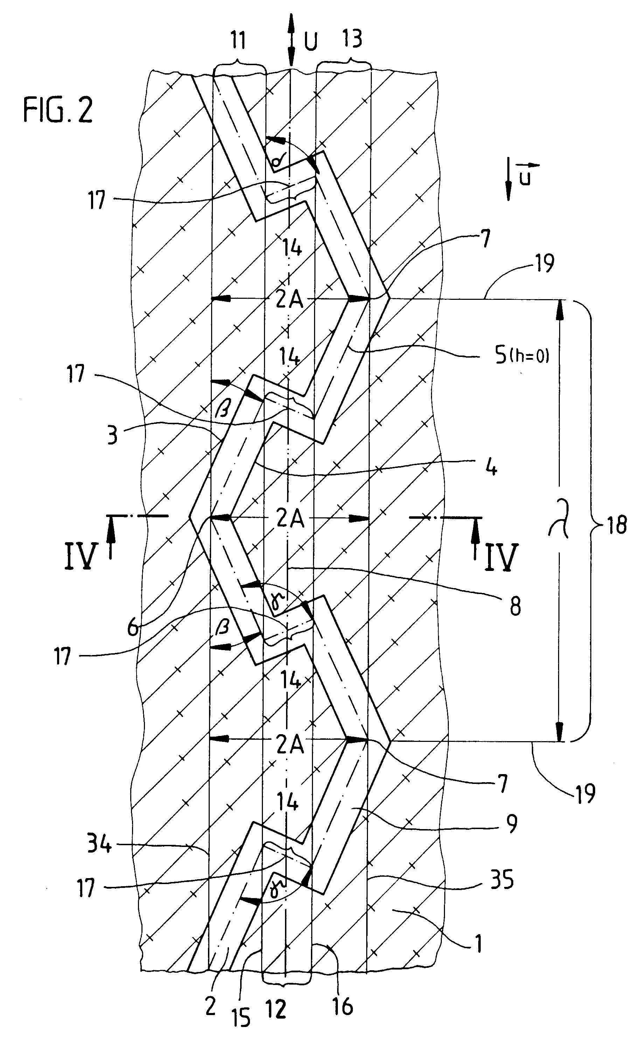

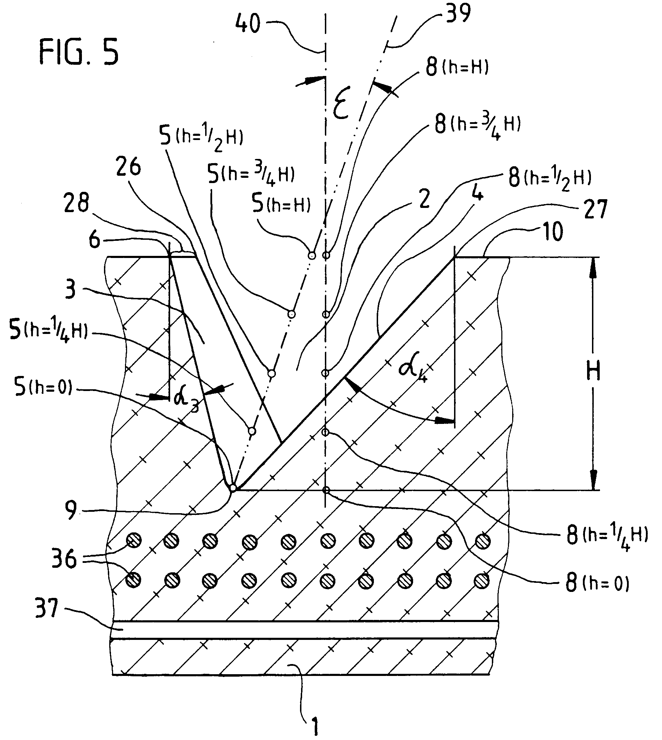

Die Figuren 2 bis 4 und 6 beziehen sich alle auf das selbe Ausführungsbeispiel wie Figur 1. Die Variante gemäß Figur 5 beeinflußt nicht den Profilrillenumriß an der Reifenperipherie, sodaß auch für diese Variante die Fig. 1 als Übersichtszeichnung betrachtet werden kann.

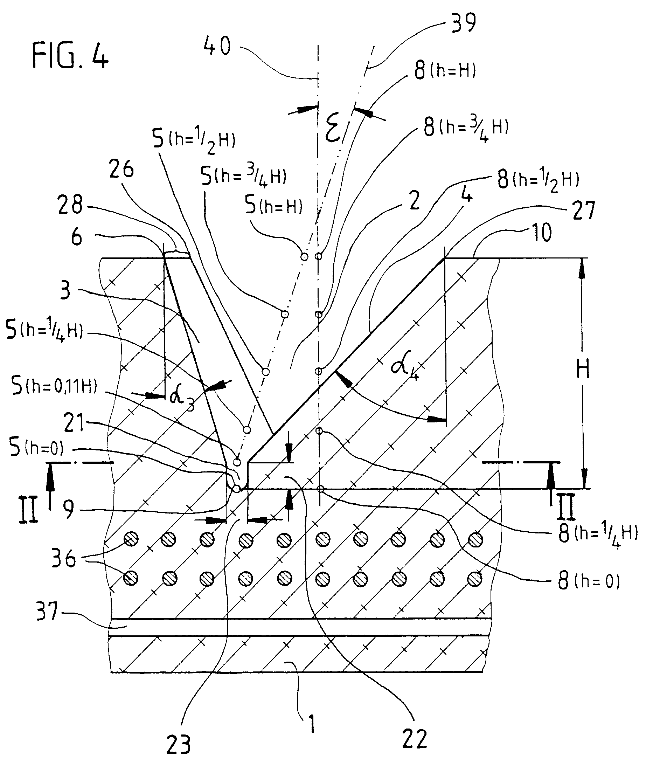

Die maßstabsgerechte Figur 2 zeigt ausschnittsweise einen Schnitt in Umfangsrichtung U durch eine Längsrille 2 eines erfindungsgemäßen Fahrzeugluftreifens 1. Der Schnittverlauf ist in der Figur 4 als Linie II-II angegeben; der Schnitt verläuft in der Nähe des Rillengrundes 9. Die linke Rillenflanke 3 erscheint wie die rechte Rillenflanke 4 als dick durchgezogene Vollinie. Mittig dazwischen ist in dünner Strichpunktlinie die Rillenmittellinie 5 verzeichnet. Die am weitesten links liegenden Punkte der Rillenmittellinie 5 werden als linke Extrema 6 bezeichnet; analog sind die am meisten rechts liegenden Punkte als rechte Extrema 7 bezeichnet. Die Extrema 6 und 7 sind in der gezeigten Ausführung als Knickstelle ausgebildet; dies ist jedoch nicht zwingend, vielmehr gehören auch solche Rillengestaltungen zur Erfindung, deren Extrema stetig gekrümmt sind.

Exakt in Umfangsrichtung U verlaufend ist durch die linken Extrema 6 eine dünne Vollinie gezogen, die nachfolgend als linke Grenze 34 des linken Extrembereiches 11 bezeichnet wird. Analog ist durch die rechten Extrema 7 die rechte Grenze 35 des rechten Extrembereiches 13 gezogen. Mittig zwischen den beiden Grenzen 34 und 35 liegt die Bezugslinie 8 , die in strichdoppelpunktierter Weise dargestellt ist. Von ihr aus ist die Wellenförmigkeit der Rillenmittellinie 5 der Längsrille 2 bemaßt.

Die Wellenlänge λ ist - abgesehen von der Reifenkrümmung in Umfangsrichtung - unabhängig von der Schnitthöhe; im Gegensatz dazu hängt die Amplitude A der Rillenmittellinie 5 von der Schnitthöhe in der Weise ab, daß - ausgehend von der hier gewählten Schnitthöhe - die Amplitude A bei zunehmender Schnitthöhe abnimmt, bei abnehmender Schnitthöhe konstant bleibt. (Bei einem Querschnitt gemäß Figur 5 statt Figur 4 nimmt die Amplitude A bei abnehmender Schnitthöhe zu.)

Wesentlich für die Erfindung ist die Gliederung des von der Rillenmittellinie 5 insgesamt beanspruchten axialen Raumes in drei Bereiche, nämlich den linken Extrembereich 11 , den Mittelbereich 12 und den rechten Extrembereich 13 . Der besonders interessante Mittelbereich 12 reicht von seiner linken Grenze 15 bis zu seiner rechten Grenze 16 , die beide (15 , 16) in Umfangsrichtung U verlaufen. Der linke Extrembereich 11 reicht von seiner linken Grenze 34 bis zur linken Grenze 15 des Mittelbereiches 12. Analog reicht der rechte Extrembereich 13 von der rechten Grenze 16 des Mittelbereiches 12 bis zu seiner rechten Grenze 35.

In beiden Extrembereichen 11, 13 sind die Längsrillen 2 in an sich bekannter Weise gestaltet, nämlich mit periodisch verwundenem Querschnitt, wobei die Verwindungsachse in Umfangsrichtung U verläuft und etwa auf Höhe der Reifenperipherie liegt.

Die Neuigkeit der gelehrten Profilrillengestaltung liegt im Mittelbereich 12. Dort sind Versätze 14 angeordnet. Die Versätze 14 verlaufen steil zur Umfangsrichtung U und etwa senkrecht zu den Rillenabschnitten in den Extrembereichen 11 und 13. Die Länge der Versätze 14 nimmt zur Reifenperipherie hin ab.

Der axiale Abstand zwischen der linken Grenze 34 des linken Extrembereiches 11 und der rechten Grenze 35 des rechten Extrembereiches 13 beträgt im gezeigten Beispiel 11,0 mm . Dieser Abstand entspricht dem Doppelten der Amplitude A; also beträgt die Amplitude A der Rillenmittellinie 5 in diesem Beispiel 5,5 mm.

Der axiale Abstand der Grenzen 15 und 16 des Mittelbereiches voneinander beträgt im selben Beispiel 3,3 mm . Ausgehend von der Bezugslinie 8 liegt also die linke Grenze 15 des Mittelbereiches 12 bei -1,65 mm und die rechte Grenze 16 bei + 1,65 mm . Der Mittelbereich erstreckt sich also - bezogen auf das Amplitudenmaß A - von -0,3 A bis

+ 0,3 A.

In an sich bekannter Weise soll auch bei erfindungsgemäßen Fahrzeugreifen 1 die Profilschrittlänge und damit die Wellenlänge λ über dem Umfang gemäß einer Profilschrittfolge schwanken, um so Resonanzspitzen zu senken. Nach der in den Figuren 1, 6 und 7 dargestellten Ausführungsform wird eine zugehörige Profilschrittfolge aus einer jeweiligen Vielzahl von drei unterschiedlich langen Profilschritten aufgebaut. Es ist möglich, daß ein Profilschritt eine Wellenlänge umfaßt; es ist aber auch möglich, daß ein Profilschritt nur eine halbe Wellenlänge umfaßt oder zwei Wellenlängen oder auch andere Vielfache der halben Wellenlänge. Desto weniger Wellenlängen ein Profilschritt umfaßt desto höher muß die Gesamtzahl der auf einem gegebenem Reifenumfang anzuordnenden Profilschritte sein. Die Auswahl der Profilschrittlänge beeinflußt nicht das Wesen der Erfindung; im Rahmen aller Ausführungsbeispiele dieser Anmeldung wird davon ausgegangen, daß die Länge eines Profilschrittes 18 mit dem Einfachen einer Wellenlänge λ übereinstimmt. Die Profilschrittgrenzen 19 verlaufen durch die rechten Extrema 7 .

Die längste Profilschrittlänge verhält sich in den gezeigten Ausführungsbeispiel zur kürzesten Profilschrittlänge wie 1,22:1 . Die Figur 2 zeigt den Rillengrund 9 in der kürzesten der drei Profilschrittlängen gemäß einer bevorzugten Ausführung. Durch die Längenvariation der Profilschritte ergibt sich bei Invarianz der Bereichsgrenzen 34, 15, 16 und 35 eine Schwankung der Winkel:
Der Winkel $\beta$ zwischen den Extrembereichen 11 oder 13 der Rillenmittellinie 5 und der Umfangsrichtung U beträgt bei der gezeigten kürzesten Profilschrittlänge 25°, bei der längsten Profilschrittlänge hingegen 21°.

Der Winkel $\gamma$ zwischen einem Versatz 14 und einem anschließenden Extrembereich 11 oder 13 beträgt bei der gezeigten kürzesten Profilschrittlänge 90°, bei der längsten Profilschrittlänge hingegen 81.3°.

Der Winkel $\delta$ zwischen einem Versatz 14 und der Umfangsrichtung U beträgt bei der gezeigten kürzesten Profilschrittlänge 65°, bei der längsten Profilschrittlänge hingegen 60,3°.

Unabhängig von der Profilschrittlängenvariation gilt:

$$\beta + \delta = \gamma$$

Wie in allen übrigen Figuren entspricht auch die Ausführung in Figur 2 dem Anspruch 13, dessen Bedeutung an dieser Figur näher erläutert werden soll: Die Umfangsrichtung U läßt zwei Orientierungen zu, nämlich vorwärts und rückwärts beziehungsweise - bezogen auf die vorliegende Zeichnung - nach oben und nach unten. Von beiden möglichen Orientierungen wird zunächst eine willkürlich ausgesucht; betrachtet sei im folgenden die Orientierung von oben nach unten. Geht man von einem beliebigen Punkt auf der Rillenmittellinie 5 , der in einem der Extrembereiche 11 oder 13 liege, aus und wandert entlang der Rillenmittellinie 5 in der gewählten Orientierung $\vec{u}$ nach unten, dann wird bei Übergang in den Mittelbereich 12 eine so große Wende erforderlich, daß der Versatz 14 in umgekehrter Umfangsorientierung $-\vec{u}$ durchlaufen wird; bei Verlassen des Mittelbereiches 12 ist die ursprüngliche Orientierung $\vec{u}$ wieder hergestellt.

Einfacher ist diese bevorzugte Ausführung dadurch zu beschreiben, daß die Winkel $\delta$ kleiner 90° sein sollen. Allerdings ist diese Formulierung erst nach Hinzuziehen dieser Figur eindeutig, um Mißverständnisse darüber auszuschließen, welcher der beiden denkbaren, komplementären Winkel zwischen Versatz 14 und Umfangsrichtung U gemeint ist.

In der Figur 2 sind alle gezeigten Profilschritte 18 gleichlang. Die Schnittpunkte der Rillenmittellinie 5 mit der Bezugslinie 8 sind Symmetriepunkte 17. Dies gilt analog bei einer Überlagerung mit einer Profilschrittfolge.

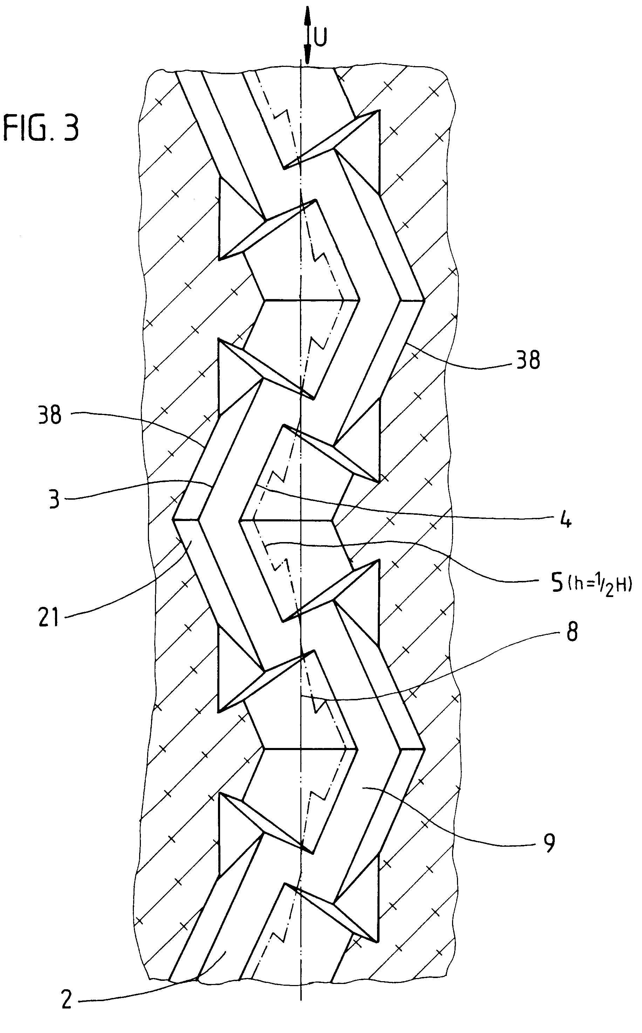

Die Figur 3 zeigt die gleiche Längsrille 2 wie die Figur 2 ebenfalls in einem Teilschnitt in Umfangsrichtung U im gleichen Maßstab, jedoch ist hier die Schnitthöhe auf die halbe Profilhöhe gelegt. Während in der vorherigen Figur die durch den Schnitt erzeugten Schnittkanten gerade die Kontur des als Ausbuchtung 21 gestalteten Rillengrundes 9 in Draufsicht zeigen, liegen hier die Schnittkanten 38 mitten auf den Rillenflanken 3 und 4 . In dieser Figur ist die Rillenmittellinie 5 in halber Profilhöhe h wie in der vorherigen Figur in strichpunktierter Linie eingezeichnet. Im übrigen wird wegen der Identität des abgebildeten Gegenstandes auf die Beschreibung der Figur 2 verwiesen.

Die Figur 4 zeigt maßstabsgerecht entsprechend dem in Figur 2 angegebenen Schnittverlauf IV-IV einen Querschnitt durch eine Längsrille 2. Für diesen Schnitt ist eine solche Umfangsstelle gewählt, daß er durch ein linkes Extrem 6 läuft. Im Gegensatz zur rechten Rillenflanke 4 erscheint dadurch ein Teil der linken Rillenflanke 3 in Ansicht und die Größenordnung der Ausnehmung 28 wird sichtbar.

Wesentlicher Inhalt der Figur 4 ist die Darstellung der Flankenwinkel. Sie werden allgemein mit dem Bezugszeichen $\alpha$ angesprochen. Speziell der Flankenwinkel der linken Flanke 3 wird mit $\alpha_3$ und der Flankenwinkel der rechten Flanke 4 mit $\alpha_4$ bezeichnet. In den Extremen ist die Differenz zwischen den beiden Flankenwinkeln maximal.

Im Gegensatz zur Bezugslinie 8 durchtritt die Rillenmittellinie 5 je nach betrachteter Höhe h die Querschnittebene an unterschiedlicher axialer Stelle. Zur Darstellung dieses Sachverhaltes sind die Durchtrittspunkte beider Linien in verschiedenen Höhen zwischen 0 und H gezeigt. In doppelstrichdoppelpunktierter Linie 39 sind die Durchtrittspunkte 5(h) der Rillenmittellinie 5 durch eine Gerade verbunden, wobei nur die Durchtrittspunkte 5-(h>0,11H) radial außerhalb der Ausbuchtung 21 berücksichtigt sind. In doppelstrichpunktierter Linie 40 sind analog die Durchtrittspunkte 8(h) der Bezugslinie 8 in den verschiedenen Höhen miteinander verbunden. In diesem Ausführungsbeispiel sind beide Verbindungslinien 39 und 40 Geraden. Der Winkel ε zwischen diesen beiden Geraden gibt ein Maß für die Größe der Verwindung an und steht in engem Zusammenhang mit der Amplitude im Rillengrund 9 . In den Extremen, wie dem als Schnittstelle hier gewählten linken Extrem 6 , ist die Verwindung am größten.

Unter konstruktiven Gesichtspunkten wird ein Rillenquerschnitt mit der hier gezeigten Ausbuchtung 21 im Rillengrund 9 bevorzugt: Hierdurch werden besonders große Flankenwinkel α möglich, was zu einer weiteren Reduzierung des Steinefangens führt.

Die unter dem Rillengrund 9 noch erkennbaren beiden Gürtellagen 36 und die Radialkarkasse 37 beschränken den Erfindungsgegenstand nicht; die erfindungsgemäße Profilierung eignet sich auch bei anderer Anzahl der Gürtellagen 36 und der Lagen der Radialkarkasse 37 .

Die Figur 5 zeigt analog Figur 4 einen Querschnitt durch eine im Profilgrund 9 ohne Ausbuchtung gestaltete Profilrille 2. Diese Ausführung hat den Vorteil, daß die Vulkanisierformen hierfür leichter hergestellt werden können als bei der konstruktiv bevorzugten Ausführung gemäß Figur 4. Wegen der ansonsten bestehenden Analogie zur vorherigen Figur wird auf deren Beschreibung verwiesen.

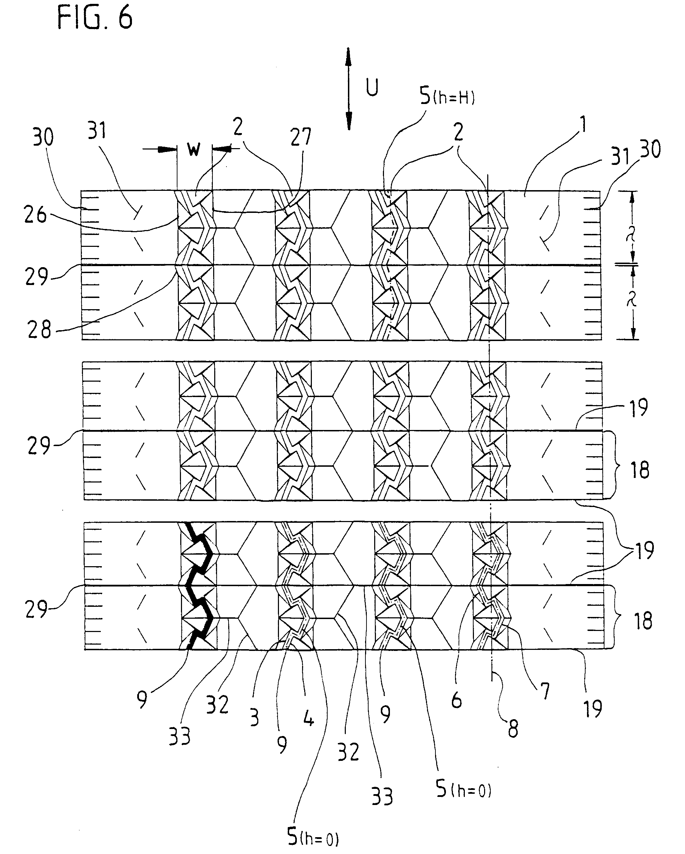

Die Figur 6 zeigt die Profilierung des Laufstreifens des gleichen Reifens wie Figur 1 in detaillierter, maßstabsgerechter Spältedarstellung. Die Spältedarstellung wird vom tatsächlichen Reifen dadurch gewonnen, daß der darzustellende Teil der Lauffläche abgewickelt und in der Draufsicht gezeigt wird. Da die Lauffläche nicht exakt zylindrisch ist, vielmehr der Reifenumfang am Laufflächenrand etwas kleiner ist als im Zenit, kann die Abwicklung bei maßstabsgerechter Darstellung nicht als homogenes Rechteck erscheinen. Der zum Rand hin zunehmende Längendefekt ist in den sogenannten "Abbildungsspalten" 29 widergegeben; daher die Bezeichnung "Spältedarstellung". Nach jeder Wellenlänge λ ist eine Abbildungsspalte 29 dargestellt. Zwecks leichteren Verständnisses der Rillengestaltung auch an den Profilschrittgrenzen 19, die hier mit den Grenzen der Abbildungsspalten 29 zusammenfallen, sind von den drei unterschiedlich langen Profilschritten 18 immer zwei gleichlange hintereinander dargestellt.

Oben sind zwei kurze, in der Mitte zwei mittellange und unten zwei lange Profilschritte 18 dargestellt. Nach Hinzutritt einer Profilschrittfolge ist damit die Profilgestaltung bis ins Detail angegeben. Die zwischen den drei Profilschrittpaaren angeordneten Lücken dienen lediglich der graphischen Gliederung.

Die in der Figur 6 gezeigte Lauffläche des Fahrzeugluftreifens 1 weist vier Längsrillen 2 auf. Die vier Längsrillen 2 sind gleichartig gestaltet, sodaß alle für eine der Längsrillen 2 erklärten Merkmale auch für die übrigen Längsrillen 2 gelten. Die linken Rillenkanten 26 und die rechten Rillenkanten 27 sowie die Ausnehmungen 28 befinden sich an der Peripherie. Da die erfindungsgemäße Rillengestaltung nur dreidimensional zu verstehen ist, wird zweckmäßigerweise gleichzeitig die Figur 4 oder Figur 5 betrachtet, die entsprechend dem in Figur 1 gezeigten Schnittverlauf senkrecht zur Umfangsrichtung in radialer Richtung eine der vier Längsrillen 2 im Querschnitt zeigt.

Die Reifenperipherie weist gemäß Figur 6 eine Lamellierung auf. Zu sehen sind Randlamellen 30, Schulterlamellen 31 und zwischen den Profilrillen 2 befindliche Lamellen, die nachfolgend als Umfangslamellen 32 bezeichnet werden. Die Umfangslamellen 32 bilden eine Wellenlinie mit gleicher Wellenlänge wie die Längsrillen 2. Die in axialer Richtung verlaufenden Zwischenlamellen 33 , weisen von den jeweiligen Extrema der Umfangslamellen 32 weg zur nächstliegenden Längsrille 2 hin. Um die Doppellinie der Abbildungsspalten 29 nicht als zur anderen axialen Richtung weisende weitere Zwischenlamelle fehlzuinterpretieren, ist die Abbildungsspalte 29 zwischen den beiden unteren Profilschritten 18 zwischen den beiden mittleren Profilrillen 2 unterbrochen dargestellt.

Die zuvor beschriebene Lamellierung harmoniert besonders glücklich mit der nachfolgend weiter beschriebenen Gestaltung der Längsrillen 2.

In den beiden unteren Profilschritten 18 auf der Figur 6 ist der Rillengrund 9 der linken Längsrille 2 zwecks dessen Hervorhebung schwarz dargestellt. Zur vereinfachten Beschreibung seines mäanderartigen Verlaufes ist für jede Längsrille 2 eine Rillenmittellinie 5 in Abhängigkeit von der betrachteten Rillenhöhe h definiert. Bei den beiden unteren Profilschritten ist für die drei weiteren Längsrillen 2 die Rillenmittellinie 5 für die Höhe h = 0 eingezeichnet. Der Übersichtlichkeit halber ist die Bezugslinie 8 nur für die rechte Längsrille 2 eingezeichnet.

In der zweiten Längsrille 2 von rechts zeigt die Figur 6 in den beiden oberen Profilschritten den Verlauf der Rillenmittellinie 5 in der Höhe h = H , also an der Peripherie. Die Darstellung der analogen Profilmittellinie in der Höhe h = 0,5 H ist in vergrößertem Maßstab der bereits behandelten Figur 3 zu entnehmen; aufgrund der Kompliziertheit der Rillenmittellinie 5(h = 0,5H) ist die Darstellung in hiesigem Maßstab unmöglich.

Die Figur 6 zeigt einen Fahrzeugluftreifen, in dem alle vier Profilrillen 2 zueinander "parallel" gestaltet sind; damit ist gemeint, daß bei jedem beliebigen Schnitt in Umfangsrichtung U äquidistant zur Reifenperipherie die entstehenden Schnittkanten auf den Flanken 3 und 4 einer Rille 2 parallel sind zu den entsprechenden Schnittkanten der drei anderen Rillen. Andersherum ausgedrückt sind sämtliche Höhenlinien zueinander äquidistant, wobei die Distanz stets in axialer Richtung zu messen ist. - Der Vorteil paralleler Rillen 2 liegt darin, daß die Rillen 2 axial besonders dicht gestaffelt werden können. Zur Erzielung einer befriedigenden Laufruhe darf das Profil dann allerdings nicht allzu grob gestaltet sein; besonders bewährt hat es sich, wenn die mittlere Wellenlänge etwa ein Siebtel der Länge der Aufstandsfläche unter Nennbedingungen beträgt.

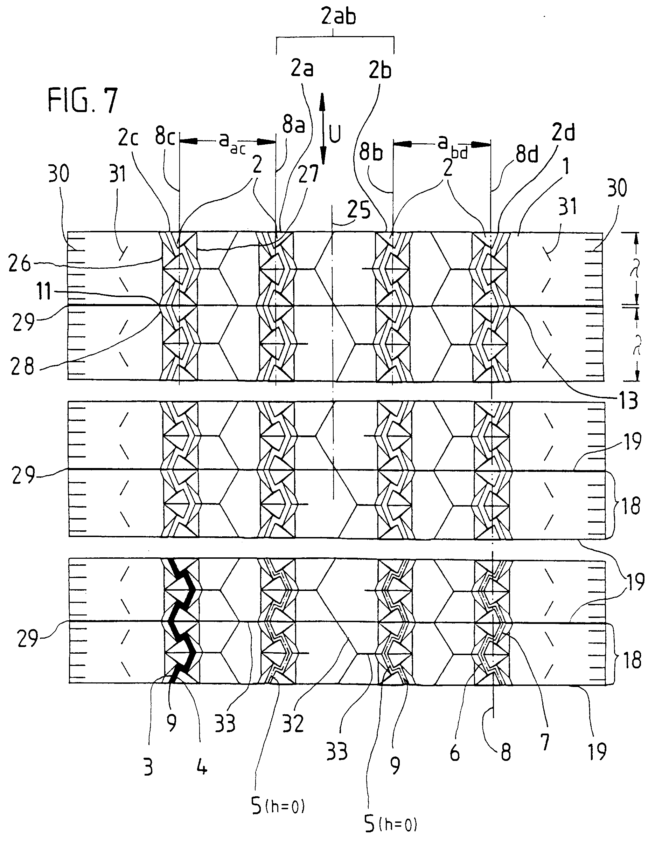

Die Figur 7 zeigt einen ganz ähnlichen Reifen wie Figur 6; der wesentliche Unterschied ist der, daß hier die Längsrillen 2 paarweise zueinander achsensymmetrisch sind bezüglich einer in der Mitte verlaufenden Achse. Die ganz linke Rille ist achsensymmetrisch zur ganz rechten und die unmittelbar links der Mitte liegende Längsrille 2 ist achsensymmetrisch zur unmittelbar rechts der Mitte liegenden. Dabei sind die beiden linken Längsrillen 2 zueinander genauso parallel wie die beiden rechten zueinander.

Natürlich ist auch eine Gestaltung in der Weise möglich, daß zwischen den beiden linken und zwischen den beiden rechten Längsrillen 2 eine Symmetrieachse angeordnet wird. Da jedoch die einander benachbarten Längsrillen 2 , die zueinander achsensymmetrisch sind, einen größeren Abstand voneinander haben müssen als parallele, würde dadurch die mögliche Rillendichte (Rillenanzahl/Breite der Lauffläche) weiter gesenkt. Deshalb wird die Beschränkung auf eine einzige Symmetrieachse, die dann in der Mitte liegen sollte, bevorzugt.

Wegen der ansonsten bestehenden Analogie zur Figur 6 wird auf deren Beschreibung zum Verständnis der Figur 7 verwiesen.

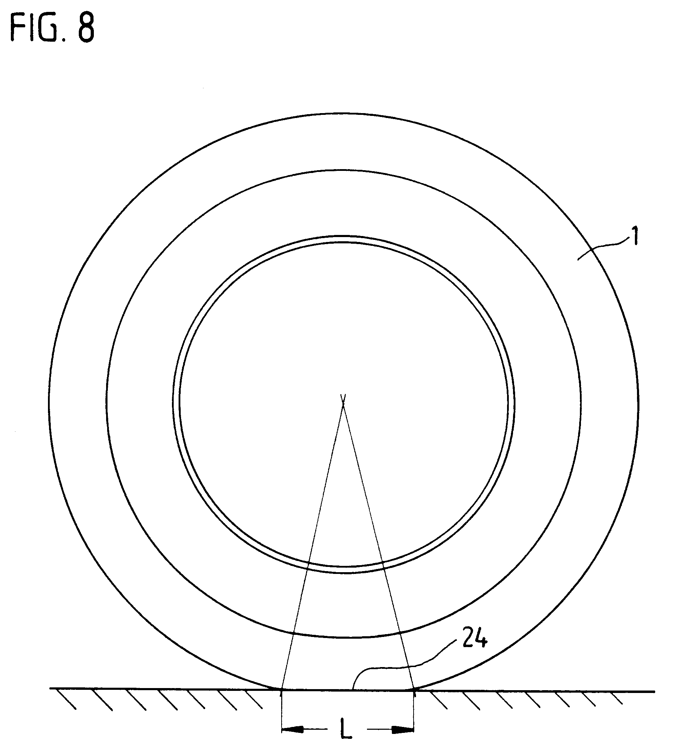

Die Figur 8 zeigt einen Fahrzeugluftreifen 1 in der Seitenansicht im Betrieb, wobei die Felge der Übersichtlichkeit halber nicht dargestellt ist. Die Figur dient lediglich der Illustration der Aufstandsfläche 24 und deren Länge L , die als Bezug für die bevorzugte Wellenlängenbemessung dient, wie in den Ansprüchen 9 und 10 gelehrt.

Als Bestandteil der Beschreibung ist eine Liste der verwendeten Bezugzeichen angefügt.

Zur weiteren Erleichterung des Verständnisses des dreidimensionalen Erfindungsgegenstandes wird ein Negativmodell im Maßstab 1:1 einer Längsrille im Umfang von zwei Wellenlängen mit überreicht.

## Bezugszeichen

| | |
|---|---|
| 1 | Fahrzeugreifen |
| 2 | Längsrille in Lauffläche von Fahrzeugreifen 1 |
| 3 | linke Rillenflanke |
| 4 | rechte Rillenflanke |
| 5 | Rillenmittellinie in bestimmter radialen Höhe H (Strichpunktlinie) |
| 6 | linkes Extrem |
| 7 | rechtes Extrem |
| 8 | Bezugslinie (Strichdoppelpunktlinie) |
| 9 | Rillengrund |
| 10 | Peripherie |
| 11 | linker Extrembereich |
| 12 | Mittelbereich |
| 13 | rechter Extrembereich |
| 14 | Versatz |
| 15 | linke Grenze des Mittelbereiches 12 |
| 16 | rechte Grenze des Mittelbereiches 12 |
| 17 | Symmetriepunkte |
| 18 | Profilschritte |
| 19 | Profilschrittgrenzen |
| 20 | Laufflächenmitte |
| 21 | Ausbuchtung im Rillengrund 9 |
| 22 | radiale Höhe der Ausbuchtung 21 |
| 23 | axiale Weite der Ausbuchtung 21 |
| 24 | Bodenaufstandsfäche |
| 25 | Symmetrieachse |
| 26 | linke Kanten der Längsrillen 2 an der Peripherie 10 |
| 27 | rechte Kanten der Längsrillen 2 an der Peripherie 10 |
| 28 | Ausnehmungen in den Rillenflanken 3, 4, die die Geradlinigkeit der Kanten 26 und 27 durchbrechen |
| 29 | Abbildungsspalten |
| 30 | Randlamellen |
| 31 | Schulterlamellen |
| 32 | Umfangslamellen |
| 33 | Zwischenlamellen |
| 34 | linke Grenze des linken Extrembereiches |
| 35 | rechte Grenze des rechten Extrembereiches |
| 36 | Gürtellagen |
| 37 | Radialkarkasse |
| 38 | Kanten die durch graphischen Schnitt erzeugt sind |
| 39 | doppelstrichdoppelpunktierte Linie durch Durchtrittspunkte 5(h) der Rillenmittellinie 5 in Querschnittebene |
| 40 | doppelstrichpunktierte Linie durch Durch- |

trittspunkte 8(h) der Bezugslinie 8 in Querschnittebene

a     Rillenabstand

u     Umfangsorientierung

w     Rillenweite an äußerer Peripherie 10

A     Amplitude der Rillenmittellinie 5 in bestimmter radialer Höhe H

H     radiale Höhe

L     Länge der Bodenaufstandsfläche 24 unter Nennbedingungen, das heißt unter Nenndruck, Nennachslast und Normaltemperatur und normalem äußeren Luftdruck

U     Umfangsrichtung

$\alpha$     Flankenwinkel

$\beta$     Winkel zwischen den Extrembereichen 11, 13 der Rillenmittellinie 5 und der Umfangsrichtung U

$\gamma$     Winkel zwischen Versatz 14 und anschließendem Extrembereich 11 bzw. 13

$\delta$     Winkel zwischen Versatz 14 und Umfangsrichtung U

$\epsilon$     Verwindungswinkel

$\lambda$     Wellenlänge der Längsrillen 2

**Patentansprüche**

1.     Fahrzeugreifen (1), insbesondere für Nutzfahrzeuge, mit in Umfangsrichtung verlaufenden wellenförmigen Längsrillen (2), wobei jeder Längsrille (2) in jeder radialen Höhe (H) genau eine zwischen der linken Rillenflanke (3) und der rechten Rillenflanke (4) gelegene Rillenmittellinie (5) zugeordnet ist und in jeder radialen Höhe (H) mittig zwischen den linken Extremen (6) und den rechten Extremen (7) der Rillenmittellinie (5) eine exakt in Umfangsrichtung (U) verlaufende Bezugslinie (8) definiert ist, von der aus in der betreffenden radialen Höhe (H) die Amplitude (A) der wellenförmigen Rillenmittellinie (5) zu messen ist, und wobei die in der Querschnittebene zu messenden Flankenwinkel ($\alpha$), um den die Rillenflanken (3, 4) jeder Längsrille (2) schräg gestellt sind, über dem Umfang periodisch schwanken, sodaß die Amplitude (A) der wellenförmigen Rillenmittellinie (5) der Längsrillen (2) im Rillengrund (9) größer als an der radial äußeren Peripherie (10) ist, wobei - die Rillenmittellinie (5) der Längsrillen (2) entlang laufend - zumindest im Rillengrund (9) nacheinander in periodischer Wiederholung verschiedene, axial nebeneinanderliegende Bereiche durchlaufen werden, **dadurch gekennzeichnet,** daß nacheinander drei verschiedene Bereiche durchlaufen werden und zwar ein linker Extrembereich (11), ein Mittelbereich (12), der symmetrisch um die Bezugslinie (8) herum angeordnet ist, und ein rechter Extrembereich (13) und umgekehrt wieder zurück und periodisch so fort, wobei die Rillenmittellinie (5) in ihren Mittelbereichen (12) je einen steil zur Umfangsrichtung (U) verlaufenden Versatz (14) aufweist, während sie in den Extrembereichen (11, 13) in an sich bekannter Weise nur einen spitzen Winkel ($\beta$) mit der Umfangsrichtung (U) einschließt.

2.     Fahrzeugreifen (1) nach Anspruch 1 dadurch gekennzeichnet, daß im Rillengrund (9) der Versatz (14) der Rillenmittellinie (5) in einem Winkel ($\gamma$) zwischen 75° und 105° an die Extrembereiche (11, 13) der Rillenmittellinie (5) anschließt.

3.     Fahrzeugreifen (1) nach Anspruch 1 dadurch gekennzeichnet, daß im Rillengrund (9) der Versatz (14) einen Winkel ($\delta$) zur Umfangsrichtung (U) zwischen 60° und 70° einnimmt.

4.     Fahrzeugreifen (1) nach Anspruch 1 dadurch gekennzeichnet, daß im Rillengrund (9) die Extrembereiche der Rillenmittellinie (9) einen Winkel ($\beta$) zur Umfangsrichtung (U) kleiner 35° einnehmen.

5.     Fahrzeugreifen (1) nach Anspruch 1 dadurch gekennzeichnet, daß sich der Mittenbereich (12) mindestens von -0,2 A bis 0,2 A und höchstens von -0,4 A bis +0,4 A erstreckt, wobei "A" das Maß der Amplitude (A) im Rillengrund (9) ist und wobei der Versatz (14) der Rillenmittellinie (5) genau von der linken, negativ bezeichneten Grenze (15) des Mittelbereiches (12) bis zur rechten, positiv bezeichneten Grenze (16) des Mittelbereiches (12) reicht.

6.     Fahrzeugreifen (1) nach Anspruch 1 dadurch gekennzeichnet, daß wellenförmige Längsrillen (2) in der Weise gepaart sind, daß die beiden Längsrillen (2a, 2b) eines Rillenpaares (2ab) zueinander bezüglich einer in Umfangsrichtung (U) verlaufenden Symmetrieachse (25) achsensymmetrisch sind, sodaß an jeder Umfangsstelle einem linken Extrem (11) einer Längsrille (2a) eines Rillenpaares (2ab) ein rechtes Extrem (13) der anderen Längsrille (2b) des Rillenpaares (2ab) entspricht und umgekehrt.

7.     Fahrzeugreifen (1) nach Anspruch 1 dadurch gekennzeichnet, daß axial eng nebeneinander liegende Längsrillen (2a, 2c; 2b, 2d) - das sind zumindest solche Längsrillen (2a, 2c; 2b, 2d), deren Bezugslinien (8a, 8c; 8b, 8d) einen kleineren Abstand ($a_{ac}$, $a_{bd}$) als das 2,6-fache der Rillentiefe (H) aufweisen - parallel zueinander verlaufen und, daß diese parallelen Längsrillen (2a, 2c; 2b, 2d) mindestens einen Abstand ($a_{ac}$, $a_{bd}$) - wiederum gemessen zwischen den Rillenbezugslinien (8a, 8c; 8b, 8d) - in Höhe des 2,2-fachen der Rillentiefe (H) aufweisen.

8. Fahrzeugreifen (1) nach Anspruch 6 und 7 dadurch gekennzeichnet, daß der Rillenabstand ($a_{ab}$) zwischen den beiden am nächsten der Laufflächenmitte (20) gelegenen Längsrillen (2a, 2b) größer ist als alle anderen Abstände ($a_{ca}$, $a_{bd}$) zwischen benachbarten Längsrillen (2) und, daß von den einander benachbarten Längsrillen (2) nur die am nächsten der Laufflächenmitte (20) gelegenen Längsrillen (2a, 2b) zueinander achsensymmetrisch sind, während die anderen einander benachbarten Längsrillen (2a, 2c; 2b, 2d) gemäß Anspruch 7 parallel zueinander verlaufen.

9. Fahrzeugreifen (1) nach Anspruch 6 dadurch gekennzeichnet, daß die größte Wellenlänge ($\lambda_{max}$) der Längsrillen (2) höchstens ein Drittel und mindestens ein Siebtel der Länge (L) der Bodenaufstandsfläche (24) unter Nennbedingungen beträgt.

10. Fahrzeugreifen (1) nach Anspruch 1 dadurch gekennzeichnet, daß alle Längsrillen (2) in an sich bekannter Weise parallel zueinander verlaufen und die größte Wellenlänge ($\lambda_{max}$) der Längsrillen (2) höchstens ein Fünftel und mindestens ein Neuntel der Länge (L) der Bodenaufstandsfläche (24) unter Nennbedingungen beträgt.

11. Fahrzeugreifen (1) nach Anspruch 1 dadurch gekennzeichnet, daß die Amplitude (A) der wellenförmigen Rillenmittellinie (5) im Rillengrund (9) mindestens 40 % der Rillenweite (w) an der Peripherie (10) beträgt.

12. Fahrzeugreifen (1) nach Anspruch 1 dadurch gekennzeichnet, daß die Amplitude (A) der wellenförmigen Rillenmittellinie (5) an der Peripherie (10) höchstens 10 % der Rillenweite (w) an der Peripherie (10) beträgt.

13. Fahrzeugreifen (1) nach Anspruch 1 dadurch gekennzeichnet, daß die Versätze (14) in umgekehrter Umfangsorientierung ($\vec{u}$) verlaufen als die Extrembereiche (11, 13).

14. Fahrzeugreifen (1) nach Anspruch 1 dadurch gekennzeichnet, daß in an sich bekannter Weise die Abwicklung der Längsrillen (2) in jeder radialen Höhe (h) punktsymmetrisch ist, wobei die Symmetriepunkte (17) auf der Bezugslinie (8) und auf den Versätzen (14) liegen.

15. Fahrzeugreifen (1) nach Anspruch 1 mit einer Profilschrittlängenvariation nach einer Profilschrittfolge, wobei das gesamte Reifenprofil durch Aneinanderreihung einer Vielzahl von 60 bis 110 Profilschritten (18), die durch Profilschrittgrenzen (19) voneinander getrennt sind, gebildet ist, wobei alle Profilschritte (18) aus einem einzigen oder aus zwei alternierenden Mustern gebildet sind und sämtliche Maße der Profilschritte (18) in axialer Richtung invariant sind, während die Maße in Umfangsrichtung (U) entsprechend der Profilschrittfolge variiert sind, dadurch gekennzeichnet, daß in an sich bekannter Weise die Abwicklung der längeninvarianten Muster der Längsrillen (2) in jeder radialen Höhe (H) punktsymmetrisch ist, wobei die Symmetriepunkte (17) auf der Bezugslinie (8) und auf den Versätzen (14) liegen.

16. Fahrzeugreifen (1) nach Anspruch 1 dadurch gekennzeichnet, daß die Längsrillen (2) im Querschnitt im Rillengrund (9) eine Ausbuchtung (21) von einer radialen Höhe (22) zwischen 1,5 und 2,2 mm und einer axialen Weite (23) zwischen 2 und 3 mm zeigen.

**Claims**

1. Vehicle tyre (1), more especially for commercial vehicles, having undulatory longitudinal grooves (2) extending in the circumferential direction, each longitudinal groove (2) having exactly associated therewith, at each radial height (H), one groove centre line (5), which is situated between the left-hand side wall of the groove (3) and the right-hand side wall of the groove (4), and a reference line (8), which extends exactly in the circumferential direction (U), is defined at each radial height (H) centrally between the left-hand extremes (6) and the right-hand extremes (7) of the groove centre line (5), the amplitude (A) of the undulatory groove centre line (5) having to be measured from said reference line at the pertinent radial height (H), and the side wall angles ($\alpha$), which are to be measured in the cross-sectional plane, and by which angles the side walls (3, 4) of each longitudinal groove (2) are inclined, varying periodically over the circumference so that the amplitude (A) of the undulatory groove centre line (5) of the longitudinal grooves (2) is greater in the groove base (9) than at the radially outer periphery (10), various axially adjacent regions being traversed in succession in periodic repetition, at least in the groove base (9) - running along the groove centre line (5) of the longitudinal grooves (2) - characterised in that three different regions are traversed in succession, that is to say a left-hand extreme region (11), a central region (12) which is disposed symmetrically around the reference line (8), and a right-hand extreme region (13), and conversely back again and periodically in like manner, the groove centre line (5) having in each of its central regions (12) an offset arrangement (14) which extends steeply relatively to the circumferential direction (U), while said centre line forms only an acute angle ($\beta$) with the circumferential direction (U) in the extreme regions (11, 13) in a manner known per se.

2. Vehicle tyre (1) according to claim 1, characterised in that the offset arrangement (14) of the groove centre line (5) communicates with the extreme regions (11, 13) of the groove centre line (5) at an angle ($\gamma$) of between 75° and 105° in the groove base (9).

3. Vehicle tyre (1) according to claim 1, characterised in that the offset arrangement (14) assumes an angle ($\delta$) relative to the circumferential direction (U) of between 60° and 70° in the groove base (9).

4. Vehicle tyre (1) according to claim 1, characterised in that the extreme regions of the groove centre line (5) assume an angle ($\beta$) relative to the circumferential direction U) of less than 35° in the groove base (9).

5. Vehicle tyre (1) according to claim 1, characterised in that the central region (12) extends at least from -0.2 A to 0.2 A and at most from -0.4 A to +0.4 A, "A" being the dimension for the amplitude (A) in the groove base (9), and the offset arrangement (14) of the groove centre line (5) extending exactly from the left-hand, negatively referenced boundary (15) of the central region (12) to the right-hand, positively referenced boundary (16) of the central region (12).

6. Vehicle tyre (1) according to claim 1, characterised in that undulatory longitudinal grooves (2) are paired in such a manner that the two longitudinal grooves (2a, 2b) of a pair of grooves (2ab) are axis-symmetrical relative to each other with respect to an axis of symmetry (25), which extends in the circumferential direction (U), so that at each circumferential location a left-hand extreme (11) of a longitudinal groove (2a) of a pair of grooves (2ab) corresponds to a right-hand extreme (13) of the other longitudinal groove (2b) of the pair of grooves (2ab), and vice versa.

7. Vehicle tyre (1) according to claim 1, characterised in that longitudinal grooves (2a, 2c; 2b, 2d), which lie axially and closely adjacent one another - that is to say at least the longitudinal grooves (2a, 2c; 2b, 2d) having reference lines (8a, 8c; 8b, 8d) with a smaller spacing ($a_{ac}$, $a_{bd}$) than 2.6-times the groove depth (H) - extend parallel to one another, and in that these parallel longitudinal grooves (2a, 2c; 2b, 2d) have at least a spacing ($a_{ac}$, $a_{bd}$) - in turn measured between the groove reference lines (8a, 8c; 8b, 8d) - of 2.2-times the groove depth (H).

8. Vehicle tyre (1) according to claims 6 and 7, characterised in that the groove spacing ($a_{ab}$) between the two longitudinal grooves (2a, 2b), situated nearest the tread surface centre (20), is greater than all of the other spacings ($a_{ca}$, $a_{bd}$) between adjacent longitudinal grooves (2), and in that, of the adjacent longitudinal grooves (2), only the longitudinal grooves (2a, 2b) situated nearest the tread surface centre (20) are axis-symmetrical relative to one another, while the other adjacent longitudinal grooves (2a, 2c; 2b, 2d) extend parallel to one another in accordance with claim 7.

9. Vehicle tyre (1) according to claim 6, characterised in that the greatest wavelength ($\lambda_{max}$) of the longitudinal grooves (2) is at most one-third and at least one-seventh of the length (L) of the ground supporting face (24) under nominal conditions.

10. Vehicle tyre (1) according to claim 1, characterised in that all of the longitudinal grooves (2) extend parallel to one another in a manner known per ?se, and the greatest wavelength ($\lambda_{max}$) of the longitudinal grooves (2) is at most one-fifth and at least one ninth of the length (L) of the ground supporting face (24) under nominal conditions.

11. Vehicle tyre (1) according to claim 1, characterised in that the amplitude (A) of the undulatory groove centre line (5) in the groove base (9) is at least 40 % of the groove width (w) at the periphery (10).

12. Vehicle tyre (1) according to claim 1, characterised in that the maximum amplitude (A) of the undulatory groove centre line (5) at the periphery (10) is 10 % of the groove width (w) at the periphery (10).

13. Vehicle tyre (1) according to claim 1, characterised in that the offset arrangements (14) extend in the circumferential orientation ($\vec{u}$) which is opposite that of the extreme regions (11, 13).

14. Vehicle tyre (1) according to claim 1, characterised in that the configuration of the longitudinal grooves (2) at each radial height (h) has point symmetry in a manner known per se, the points of symmetry (17) lying on the reference line (8) and on the offset arrangements (14).

15. Vehicle tyre (1) according to claim 1, having a variation in the profile step length according to a profile step sequence, the entire tyre profile being formed by disposing in series a plurality of between 60 and 110 profile steps (18), which are separated from one another by profile step boundaries (19), all of the profile steps (18) being formed from a single pattern or from two alternating patterns, and all of the dimensions of the profile steps (18) being invariant in the axial direction, while the dimensions in the circumferential direction (U) are varied according to the profile step sequence, characterised in that the configuration of the longitudinally invariant patterns of the longitudinal grooves (2) is point-symmetrical at each radial height (H), the points of symmetry (17) lying on the reference line (8) and on the offset arrangements (14).

16. Vehicle tyre (1) according to claim 1, characterised in that the longitudinal grooves (2) comprise a bulge (21) having a radial height (22) of between 1.5 and 2.2 mm and an axial width (23) of between 2 and 3 mm in the cross-section in the groove base (9).

**Revendications**

1. Bandage pneumatique (1) de véhicule, en particulier pour véhicules utilitaires, comprenant des rayures longitudinales sinueuses (2) orientées dans la direction de la circonférence, une ligne de symétrie de rayure (5) située exactement entre le flanc gauche (3) de la rayure et le flanc droit (4) de la rayure étant affectée à chaque rayure longitudinale (2) à chaque niveau radial (H) et une ligne de référence (8) orientée exactement dans la direction de la circonférence (U) étant définie à chaque niveau radial (H) au milieu entre les extrêmes gauches (6) et les extrêmes droits (7) de la ligne de symétrie (5) des rayures, ligne de référence à partir de laquelle l'amplitude (A) de la ligne de symétrie sinueuse (5) des rayures doit être mesurée au niveau radial concerné (H) et les angles de flanc ($\alpha$) qui doivent

être mesurés dans le plan de la coupe transversale et suivant lesquels les flancs (3, 4) de chaque rayure longitudinale (2) sont placés obliquement fluctuant périodiquement à la circonférence, de façon que l'amplitude (A) de la ligne de symétrie sinueuse (5) des rayures longitudinales (2) soit plus grande dans le fond (9) des rayures qu'à la périphérie radialement extérieure (10), différentes zones axiales juxtaposées étant parcourues successivement avec une récurrence périodique au moins dans le fond (9) des rayures - en suivant la ligne de symétrie (5) des rayures longitudinales (2) -, caractérisé en ce que trois zones différentes successives sont parcourues et plus particulièrement une zone (11) d'extrêmes gauches, une zone médiane (12) qui est disposée symétriquement de part et d'autre de la ligne de référence (8) et une zone (13) d'extrêmes droits et inversement vers l'arrière et ainsi de suite périodiquement, la ligne de symétrie (5) des rayures comportant dans chacune de ses zones médianes (12) un déport (14) qui est fortement incliné sur la direction de la circonférence (12), tandis que, dans les zones (11, 13) des extrêmes, elle n'inscrit de manière connue qu'un angle aigu ($\beta$) avec la direction de la circonférence (U).

2. Bandage pneumatique (1) de véhicule selon la revendication 1, caractérisé en ce que le déport (14) de la ligne de symétrie (5) des rayures se raccorde dans le fond (9) des rayures suivant un angle ($\gamma$) compris entre 75° et 105° aux zones extrêmes (11, 13) de la ligne de symétrie (5) des rayures.

3. Bandage pneumatique (1) de véhicule selon la revendication 1, caractérisé en ce que le déport (14) inscrit dans le fond (9) des rayures un angle ($\delta$) compris entre 60° et 70° avec la direction de la circonférence (U).

4. Bandage pneumatique (1) de véhicule selon la revendication 1, caractérisé en ce que les zones des extrêmes de la ligne de symétrie (9) des rayures inscrit dans le fond (9) des rayures un angle ($\beta$) inférieur à 35° avec la direction de la circonférence (U).

5. Bandage pneumatique (1) de véhicule selon la revendication 1, caractérisé en ce que la zone médiane (12) va au minimum de -0,2 A à 0,2 A et au maximum de -0,4 A à +0,4 A, "A" étant la cote de l'amplitude (A) dans le fond (9) des rayures et le déport (14) de la ligne de symétrie (5) des rayures allant exactement de la limite gauche (15), ayant un signe négatif, de la zone médiane (12) à la limite droite (16), ayant un signe positif, de la zone médiane (12).

6. Bandage pneumatique (1) de véhicule selon la revendication 1, caractérisé en ce que les rayures longitudinales sinueuses (2) sont appariées de manière que les deux rayures longitudinales (2a, 2b) d'une paire de rayures (2ab) soient symétriques par rapport à un axe de symétrie (25) orienté dans la direction de la circonférence (U) de manière qu'à chaque lieu de la circonférence, un extrême droit (13) d'une rayure longitudinale (2b) d'une paire de rayures (2ab) corresponde à un extrême gauche (11) de l'autre rayure longitudinale (2a) de la paire de rayures (2ab) et inversement.

7. Bandage pneumatique (1) de véhicule selon la revendication 1, caractérisé en ce que des rayures longitudinales étroitement juxtaposées axialement (2a, 2c ; 2b, 2d) - il s'agit au moins des rayures longitudinales (2a, 2c ; 2b, 2d) dont les lignes de référence (8a, 8c ; 8b, 8d) sont à une distance l'une de l'autre ($a_{ac}$, $a_{bd}$) qui est plus petite que 2,6 fois la profondeur (H) des rayures - sont parallèles l'une à l'autre et en ce que ces rayures longitudinales parallèles (2a, 2c ; 2b, 2d) sont au moins à une distance ($a_{ac}$, $a_{bd}$) - également mesurée entre les lignes de référence des rayures (8a, 8c ; 8b, 8d) - de l'ordre de 2,2 fois la profondeur (H) des rayures.

8. Bandage pneumatique (1) de véhicule selon les revendications 6 et 7, caractérisé en ce que la distance ($a_{ab}$) séparant les deux rayures longitudinales (2a, 2b) qui sont les plus proches du milieu (20) de la surface de roulement est plus grande que toutes les autres distances ($a_{ca}$, $a_{bd}$) séparant les rayures longitudinales voisines (2) et en ce que, parmi les rayures longitudinales voisines (2), seules les rayures longitudinales (2a, 2b) qui sont les plus proches du milieu (20) de la surface de roulement sont symétriques par rapport à une droite, tandis que les autres rayures longitudinales voisines les unes des autres (2a, 2c ; 2b, 2d) sont parallèles les unes aux autres conformément à la revendication 7.

9. Bandage pneumatique (1) de véhicule selon la revendication 6, caractérisé en ce que la plus grande longueur d'onde ($\lambda_{max}$) des rayures longitudinales (2) correspond au maximum à un tiers et au minimum à un septième de la longueur (L) de la surface de contact au sol (24) dans les conditions nominales.

10. Bandage pneumatique (1) de véhicule selon la revendication 1, caractérisé en ce que toutes les rayures longitudinales (2) sont parallèles les unes aux autres de manière connue et la plus grande longueur d'onde ($\lambda_{max}$) des rayures longitudinales (2) correspond au maximum à un cinquième et au minimum à neuvième de la longueur (L) de la surface de contact au sol (24) dans les conditions nominales.

11. Bandage pneumatique (1) de véhicule selon la revendication 1, caractérisé en ce que l'amplitude (A) de la ligne de symétrie sinueuse (5) des rayures, au fond (9) des rayures, correspond à au moins 40% de la largeur (w) des rayures à la périphérie (10).

12. Bandage pneumatique (1) de véhicule selon la revendication 1, caractérisé en ce que l'amplitude (A) de la ligne de symétrie sinueuse des rayures à la périphérie (10) correspond au maximum à 10% de la largeur (w) des rayures à la périphérie (10).

13. Bandage pneumatique (1) de véhicule selon la revendication 1, caractérisé en ce que les déports (14) ont une orientation ($\vec{u}$) à la périphérie qui est l'inverse de celle des zones extrêmes (11, 13).

14. Bandage pneumatique (1) de véhicule selon la revendication 1, caractérisé en ce que la projection en développé des rayures longitudinales (2) présente de manière connue une symétrie ponctuelle à chaque niveau radial (h), les points de symétrie (17) étant situés sur la ligne de référence (8) et sur les déports (14).

15. Bandage pneumatique (1) de véhicule selon la revendication 1, présentant une variation de la longueur des pas de profilage conforme à une séquence de pas de profilage, le profilage global du pneumatique étant formé d'une succession d'un multiple de 60 à 110 pas de profilage (18) qui sont séparés les uns des autres par des limites (19) de pas de profilage, tous les pas de profilage (18) étant formés d'un unique dessin ou de deux dessins alternants et toutes les cotes des pas de profilage (18) étant invariantes en direction axiale, tandis que les cotes en direction circonférentielle (U) varient selon la séquence des pas de profilage, caractérisé en ce que la projection en développé du dessin de longueur invariante des rayures longitudinales (2) présente de manière connue une symétrie ponctuelle à chaque niveau radial (H), les points de symétrie (17) étant situés sur la ligne de référence (8) et sur les déports (14).

16. Bandage pneumatique (1) de véhicule selon la revendication 1, caractérisé en ce que les rayures longitudinales (2) comportent en coupe transversale, dans le fond (9) des rayures, une échancrure (21) d'une hauteur radiale (22) comprise entre 1,5 et 2,2 mm et d'une largeur axiale (23) comprise entre 2 et 3 mm.

FIG. 1

FIG.2

FIG. 3

FIG. 4

FIG. 5

FIG. 6

# FIG. 7

# FIG. 8